Europäisches Patentamt

European Patent Office

Office européen des brevets

(11) Veröffentlichungsnummer: **0 193 062**
**A1**

(12) # EUROPÄISCHE PATENTANMELDUNG

(21) Anmeldenummer: **86101971.9**

(22) Anmeldetag: **17.02.86**

(51) Int. Cl.⁴: **A 22 C 11/10**

(30) Priorität: **20.02.85 AR 299552**
**25.01.86 DE 3602202**

(43) Veröffentlichungstag der Anmeldung:
**03.09.86 Patentblatt 86/36**

(84) Benannte Vertragsstaaten:
**AT BE CH DE FR GB IT LI NL SE**

(71) Anmelder: **Kollross, Günter**
**Am Wallerstädter Weg 20**
**D-6080 Gross Gerau-Dornheim(DE)**

(72) Erfinder: **Vinokur, Isaac**
**Soler 4418**
**Buenos Aires(AR)**

(74) Vertreter: **Beyer, Werner, Dipl.-Ing. et al,**
**Patentanwälte Dipl.-Ing. Werner Beyer**
**Dipl.-Wirtsch.-Ing. Bernd Jochem Staufenstrasse 36**
**Postfach 17 01 45**
**D-6000 Frankfurt/Main(DE)**

(54) Abdrehfutter bei einer Wurstfüllmaschine zur Herstellung von Strangwurst, insbesondere Brühwürstchen.

(57) Die Erfindung schafft ein Abdrehfutter bei einer Wurstfüllmaschine zur Herstellung von Strangwurst, insbesondere Brühwürstchen, das auch hochempfindliches Schlauchhüllenmaterial wie dünnwandiges Polypropylen nicht übermäßig beansprucht und dennoch ein einwandfreies Abdrehen gewährleistet. Das Futter besteht aus zwei einander koaxial umschließenden und an einem Ende formschlüssig miteinander verbundenen Hülsenteilen (22, 24), von denen das äußere zylindrisch ausgebildet ist, während das innere Hülsenteil sich zu seinem freien Ende hin konisch verjüngt und innenseitig mit in Schlitze (52) übergehenden Axialnuter (50) versehen ist, wodurch der Hauptabschnitt (46) dieses Hülsenteils (24) in radial federnde Zungen (54) unterteilt ist.

Fig. 1

EP 0 193 062 A1

0193062

## Beschreibung

Die Erfindung betrifft ein Abdrehfutter bei einer Wurstfüllmaschine zur Herstellung von Strangwurst, insbesondere Brühwürstchen, bestehend aus einer im Inneren mit längs laufenden Kanten versehenen Hülse, welche die Füllrohrmündung der Maschine mit dem beim Füllen darüber vom Füllrohr abgezogenen Schlauchhüllenmaterial übergreift und zum periodischen Abdrehen der gefüllten Schlauchhülle zu einer Wurstkette koaxial zu dem stillstehenden Füllrohr drehend antreibbar ist.

Aus der US-PS 3 115 668 ist eine Wurstfüllmaschine für Strangwurst mit einem solchem Abdrehfutter bekannt, bei welchem eine das Futter bildende zylindrische Hülse, die in der Nabe eines zugleich mit der Füllpumpe antreibbaren Zahnrades aufgenommen ist, im Inneren vier längslaufende Rippen aufweist, deren Höhe in Abzugsrichtung des Schlauchhüllenmaterials von einem zum anderen Ende hin zunächst linear ansteigt und dann in einem kurzen Bogen zum Hülsenende hin absinkt. Während des Füllens graben sich die Rippen in das unter dem Fülldruck des Wurtbräts stehende Schlauchhüllenmaterial ein und nehmen dieses mit ihren Kanten in Drehrichtung mit.

Aus dem eine Weiterentwicklung der in der US-PS 3 115 668 gezeigten und beschriebenen Maschine beinhaltenden US-PS 3 196 222 ist das Abdrehfutter dahingehend abgeändert, daß die zylindrische Hülse dickwandig ausgebildet ist und an dem zur Füllmaschine weisenden Ende eine konische Anfasung enthält, von der sich Längsnuten mit teilkreisförmigem Querschnitt unter Bildung scharfer Trennkanten bis zum anderen Hülsenende erstrecken. Auch hierbei graben sich die zwischen den Längsnuten gebildeten Trennkanten in das unter dem Fülldruck des Wurstbräts stehende Schlauchhüllenmaterial ein und nehmen ebenso wie bei dem vorbeschriebenen Abdrehfutter den gefüllten Schlauchhüllenstrang in Drehrichtung mit.

Beide Futterausführungen haben sich in Verbindung mit Zellulose
oder Collagen als Schlauchhüllenmaterial, wie es vor allem für
Brühwürstchen als sogenannter"Schäldarm" bisher allgemein verwendet wird, dahingehend bewährt, daß sie den frisch gefüllten
Schlauchhüllenstrang einschließlich dem auf dem Füllrohr gelagerten, raupenartig gerafften Vorrat an Schlauchhüllenmaterial
gegenüber zwischen Förderketten gebildeten Abdrehstellen, die
den Schlauchhüllenstrang gegen Drehung festhalten, zur Bildung
von Abdrehzöpfen ohne Beschädigung des Hüllenmaterials in
Drehrichtung einwandfrei mitnehmen.

In der EP-Patentanmeldungsveröffentlichung o 166 226 zur Anmeldung
85l06421.2 ist nun der Vorschlag gemacht worden, das relativ
teure Schlauchhüllenmaterial aus Zellulose bzw. Collagen durch
solches aus längs- und quergerecktem Polypropylen von sehr
geringer Dicke zu ersetzen, das nicht nur wesentlich billiger,
sondern zugleich auch wesentlich geeigneter zum späteren Schälen
der Wurst ist. Bei dem Versuch, dieses Hüllenmaterial auf
Füllmaschinen mit den bekannten Abdrehfutterausführungen zu
bearbeiten, hat sich jedoch gezeigt, daß das Hüllenmaterial beim
Durchtritt durch das drehende Abdrehfutter entweder reißt oder
in Drehrichtung rutscht, was beides nicht hingenommen werden kann.

Der Erfindung liegt deshalb die Aufgabe zugrunde, ein Abdrehfutter der eingangs genannten Art dahingehend weiterzubilden, das
mit ihmSchlauchhüllenmaterial aus dünnwandigem Polypropylen
ohne die Gefahr des Reißens bei gleichzeitiger Gewährleistung
eines einwandfreien Abdrehens des gefüllten Schlauchhüllenstrangs verarbeitet werden kann.

Erfindungsgemäß wird diese Aufgabe dadurch gelöst, daß die Hülse
aus zwei einander koaxial umschließenden und an einem Ende
formschlüssig miteinander verbundenen Teilen besteht, von denen
das äußere Hülsenteil im wesentlichen zylindrisch ausgebildet
ist, während das innere Hülsenteil sich zu seinem freien Ende
hin konisch verjüngt und innerhalb seines mit dem äußeren Hülsenteil verbundenen Endabschnitts innenseitig mit wenigstens zwei die Kanten bildende Axialnuten versehen ist, die sich im anschließenden Hauptabschnitt des inneren Hülsenteils bis zum anderen Ende als Schlitze fortsetzen und dadurch den Hauptabschnitt des inneren Hülsenteils in radial federnde Zungen unterteilen.

Wie Versuche inzwischen gezeigt haben, arbeitet das erfindungsgemäße Abdrehfutter auch bei Schlauchhüllenmaterial aus dünnwandigem Polypropylen einwandfrei. Dies erklärt sich einmal durch die großflächige Anlage der federnden Zungen auf der Hüllenaußenseite und zum anderen durch die geringe Breite der dazwischen liegenden Schlitze bzw. Axialnuten, in welche sich das unter dem Fülldruck des Wurstbräts stehende Schlauchhüllenmaterial nur geringfügig einwölbt, so daß die Kanten der Schlitze bzw. Nuten das Material nicht überbeanspruchen.

Vorteilhafte Ausgestaltungen der Erfindung ergeben sich aus den Unteransprüchen.

Ein Ausführungsbeispiel der Erfindung wird nachstehend in Verbindung mit der Zeichnung näher erläutert. Es zeigen:

Fig. 1      einen Längsschnitt durch das Ende des Füllrohrs einer Wurstfüllmaschine während des Füllens mit einer über dessen Mündung ablaufenden Schlauchhülle und einem die Füllrohrmündung mit der Schlauchhülle übergreifenden, drehend antreibbaren Abdrehfutter,

Fig. 2      einen Längsschnitt durch das äußere Hülsenteils des Abdrehfutters,

Fig. 3            einen Längsschnitt durch das innere Hülsenteil des Abdrehfutters,

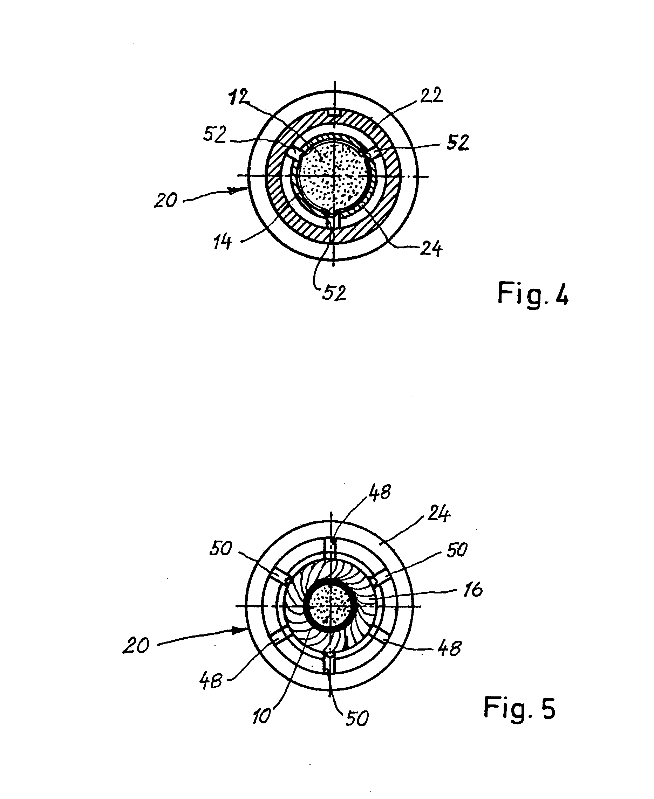

Fig. 4            einen Querschnitt durch das Abdrehfutter
                 nach Schnittlinie IV-IV in Fig. 1 und

Fig. 5            eine Stirnansicht des Abdrehfutters in
                 Richtung des Pfeils V in Fig. 1.

In der Zeichnung ist mit 1o das Füllrohr einer (nicht dargestellten) Wurstfüllmaschine beispielsweise zur Herstellung von
Brühwürstchen in natürlicher Größe bezeichnet, durch welches
Wurstbrät 12 unter Druck in eine Schlauchhülle 14 aus dünnwandigem Polypropylen eingefüllt wird, die zuvor in axial geraffter Form als sogenannte Schlauchraupe 16 auf das Füllrohr 1o
aufgeschoben wurde.

Die Schlauchhülle 14 wird durch den Fülldruck des Bräts über
die Füllrohrmündung 18 hinweg abgezogen, die von einem in seiner
Gesamtheit mit 2o bezeichneten Abdrehfutter übergriffen wird.

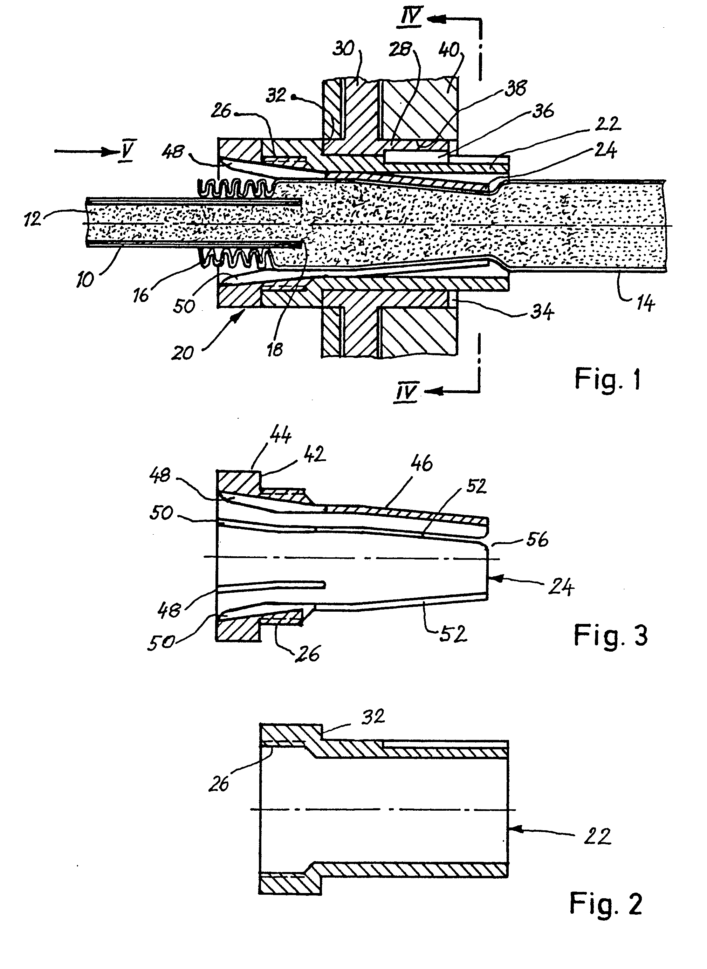

Das Abdrehfutter 2o besteht aus einem äußeren Hülsenteil 22 und
einem inneren Hülsenteil 24, die in den Figuren 2 und 3 einzeln
dargestellt und an den zur Füllmaschine weisenden Enden durch
Gewindegänge 26 formschlüssig miteinander verbunden sind.

Das äußere Hülsenteil 22 ist im wesentlichen zylindrisch ausgebildet und wird von der Nabe 28 eines im übrigen weggebrochenen
Zahnrades 3o aufgenommen, in welcher es zwischen einer Schulter
32 und einem Klemmring 34 axial in Stellung gehalten ist. Ein
in entsprechende Axialnuten eingesetzter Keil 36 sorgt für
eine drehfeste Verbindung  dieser Teile.

Das Zahnrad 3o ist mit der Außenseite der Nabe 28 in Bohrungen
38 einer nicht weiter gezeigten doppelwandigen Lagereinrichtung 4o gelagert und wird zusammen mit der Füllpumpe der Maschine beim Füllen des Schlauchhüllenmaterials angetrieben.

Das innere Hülsenteil 24 besteht, wie in Fig. 3'gezeigt, aus einem unter Bildung einer Schulter 42 stufenförmig abgesetzten Endabschnitt 44, dessen kleinerer Teil die Gewindegänge 26 trägt, und einem dünnwandigen Hauptabschnitt 46, der zunächst zylindrisch ausgebildet ist und sich dann zum freien Ende hin kegelstumpfförmig verjüngt. Der stufenförmig abgesetzte Endabschnitt 44 ist im Inneren kegelstumpfförmig aufgeweitet und mit sechs am Umfang verteilten Axialnuten 48, 5o versehen, von denen jede zweite Nut 48 am Anfang des Hauptabschnitts 46 in Gestalt einer durchgehenden Radialbohrung endet. Die übrigen drei Nuten 5o setzen sich als axial verlaufende Schlitze 52 in dem Hauptabschnitt 46 des inneren Hülsenteils 24 bis zu dessen freiem Ende fort und unterteilen dadurch den Hauptabschnitt 44 in drei radial federnde Zungen 54, deren Enden unter Erweiterung der Schlitze 52, wie bei 56 in Fig. 3 gezeigt, abgerundet sind.

Wie aus Fig. 1 ersichtlich, entspricht der Innendurchmesser des inneren Hülsenteils 24 in seinem zylindrisch ausgebildeten mittleren Bereich ungefähr dem sogenannten Kaliber des Schlauchhüllenmaterials oder ist geringfügig kleiner als dieses. Dadurch ist gewährleistet, daß das vom Fülldruck des Wurstbrätes aufgeweitete Schlauchmaterial vermittels der konischen Aufweitung im Endabschnitt 44 des inneren Hülsenteils 24 ohne nennenswerten Widerstand in dieses einlaufen und sich dabei bereits geringfügig in die Axialnuten 48, 5o einwölben kann. Von da aus gelangt das Schlauchhüllenmaterial in den sich kegelstumpfartig verjüngenden Hauptabschnitt 46 des inneren Hülsenteils 24 und wird dessen Zungen 54 mehr oder weniger stark nach auswärts biegen, so daß sich die Breite der Schlitze 52 zum freien Ende der Zungen 54 hin geringfügig erweitert. Je größer diese Erweiterung ist, umso stärker wird sich das Schlauchmaterial in die Schlitze hineinwölben, und umso wirksamer werden die Kanten der Schlitze 52 das Schlauchhüllenmaterial erfassen und in Drehrichtung mitnehmen. Dennoch wird
ein Reißen des Schlauchhüllenmaterials vermieden, weil die
Zungen im Falle unzulässig hoher Mitnahmekräfte von selbst nachgeben.

Wenigstens das innere Hülsenteil 22 sollte aus einem elastisch
nachgiebigen Kunststoff mit guten Gleiteigenschaften wie
beispielsweise Polyamid oder Polytetrafluoräthylen bestehen.
Die Anzahl der in Schlitze übergehenden Axialnuten sollte
wenigstens zwei betragen, wobei jedoch mit Rücksicht auf das
radiale Federungsvermögen mindestens drei vorzuziehen sind.
Bei einer noch größeren Anzahl von Schlitzen können die
Zwischennuten auch entfallen.

Bei der Gewindeverbindung zwischen den Hülsenteilen 22, 24 ist
natürlich darauf zu achten, daß das Gewinde eine solche
Steigungsrichtung hat, daß sich die vorgenannten Teile beim
Antrieb durch das Zahnrad 30 nicht voneinander lösen.

## Patentansprüche

1. Abdrehfutter bei einer Wurstfüllmaschine zur Herstellung von Strangwurst, insbesondere Brühwürstchen, bestehend aus einer im Inneren mit längs laufenden Kanten versehenen Hülse, welche die Füllrohrmündung der Maschine mit dem beim Füllen darüber vom Füllrohr abgezogenen Schlauchhüllenmaterial übergreift und zum periodischen Abdrehen der gefüllten Schlauchhülle zu einer Wurstkette koaxial zu dem stillstehenden Füllrohr drehend antreibbar ist, d a d u r c h  g e k e n n z e i c h n e t , daß die Hülse aus zwei einander koaxial umschließenden und an einem Ende formschlüssig miteinander verbundenen Teilen (22, 24) besteht, von denen das äußere Hülsenteil (22) im wesentlichen zylindrisch ausgebildet ist, während das innere Hülsenteil (24) sich zu seinem freien Ende hin konisch verjüngt und innerhalb seines mit dem äußeren Hülsenteil (22) verbundenen Endabschnitts (44) innenseitig mit wenigstens zwei die Kanten bildenden Axialnuten (5o) versehen ist, die sich im anschließenden Hauptabschnitt (46) des inneren Hülsenteils (24) bis zum anderen Ende als Schlitze (52) fortsetzen und dadurch den Hauptabschnitt (46) des inneren Hülsenteils (24) in radial federnde Zungen (54) unterteilen.

2. Abdrehfutter nach Anspruch 1, d a d u r c h  g e k e n n z e i c h n e t , daß die Hülsenteile (22, 24) durch Gewinde (26) miteinander verbunden sind.

3. Abdrehfutter nach Anspruch 1 oder 2, d a d u r c h  g e k e n n z e i c h n e t , daß die Anzahl der in die Längsschlitze (52) übergehenden Axialnuten (5o) mindestens drei beträgt.

4. Abdrehfutter nach einem der vorhergehenden Ansprüche, d a - d u r c h   g e k e n n z e i c h n e t , daß zwischen den in die Längsschlitze (52) übergehenden Axialnuten (5o) weitere Axialnuten (48) innerhalb des mit dem äußeren Hülsenteil (22) verbundenen Endabschnitts (44) angeordnet sind, die am Anfang des geschlitzten Abschnitts (46) in durchgehenden Radialbohrungen enden.

5. Abdrehfutter nach einem der vorhergehenden Ansprüche, d a - d u r c h   g e k e n n z e i c h n e t , daß die Zungen (54) an den Enden unter Aufweitung der Schlitze (54) (bei 56) abgerundet sind.

6. Abdrehfutter nach einem der vorhergehenden Ansprüche,  d a - d u r c h   g e k e n n z e i c h n e t , daß wenigstens das innere Hülsenteil (24) aus einem elastischen Kunststoff mit guten Gleiteigenschaften besteht.

0193062

Fig. 1

Fig. 3

Fig. 2

0193062

Fig. 4

Fig. 5

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | EP-A-0 123 932 (UNION CARBIDE) * Seite 22, Zeile 27 - Seite 23, Zeile 1; Figur 4 * | 1,5 | A 22 C 11/10 |
| A | US-A-3 191 222 (TOWNSEND) * Spalte 3, Zeilen 53-59; Spalte 7, Zeilen 3-11 * | 1 | |
| D,A | US-A-3 115 668 (TOWNSEND) * Spalte 3, Zeilen 28-34; Spalte 6, Zeilen 53-59 * | 1 | |
| A | FR-A-2 366 796 (TOWNSEND) * Seite 3, Zeilen 25-28 * | 1 | |
| A | FR-A-2 253 459 (HANDTMANN) * Ansprüche 5,6 * | 6 | RECHERCHIERTE SACHGEBIETE (Int Cl 4) |
| A | DE-A-1 965 672 (KALLE) | | A 22 C |
| A | FR-A-1 353 051 (MANUFACTURE DE MACHINES DU HAUT-RHIN) | | |
| A | DE-B-1 190 832 (ROHWER) | | |
| A | GB-A-1 076 956 (WETTER) | | |
| | --- -/- | | |

Der vorliegende Recherchenbericht wurde für alle Patentansprüche erstellt.

| Recherchenort DEN HAAG | Abschlußdatum der Recherche 29-05-1986 | Prüfer DE LAMEILLIEURE D. |
|---|---|---|

## EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CH-A- 458 969 (JOHNSON & JOHNSON) | | |
| | --- | | |
| A | FR-A-1 497 528 (VEMAG) | | |
| | --- | | |
| A | FR-E- 79 958 (HANDTMANN) | | |
| | ----- | | |

RECHERCHIERTE
SACHGEBIETE (Int. Cl.4)

Der vorliegende Recherchenbericht wurde für alle Patentansprüche erstellt

| Recherchenort DEN HAAG | Abschlußdatum der Recherche 29-05-1986 | Prüfer DE LAMEILLIEURE D. |
|---|---|---|